# EUROPEAN PATENT SPECIFICATION

(11) **EP 1 557 024 B1**
(45) Date of publication and mention of the grant of the patent: **08.08.2007**
(21) Application number: 03753762.8
(22) Date of filing: 08.10.2003
(51) Int. Cl.: H04L 29/06

(54) **Parallel access to data over a packet network**
Parallelzugriff zu Data über ein Paketnetzwerk
Accés parallel aux données via un réseau de commutation de paquets

(30) Priority: 31.10.2002 GB 0225356
(43) Date of publication of application: 27.07.2005
(73) Proprietor: BRITISH TELECOMMUNICATIONS public limited company, London EC1A 7AJ (GB)
(72) Inventor: CLARK, Jonathan, Andrew, IPSWICH, Suffolk IP2 9PE (GB)
(74) Representative: Lidbetter, Timothy Guy Edwin
(86) International application number: PCT/GB2003/004374
(87) International publication number: WO 2004/040877

(56) References cited:
- WO-A-99/66689
- US-A1- 2002 083 193
- US-A1- 2002 114 332

## Description

This invention relates to the accession of data from a database, and in particular the accession of large files or streamed (non real time) video from remote websites.

Currently, if a user having a high bit rate (2Mb/s) ADSL (asymmetric digital subscriber loop) connection attempts to "stream" a high bit-rate video computer file from a remote site, perhaps in another country, the bit rate received is often very much slower than the user's connection is capable of, perhaps only 100 - 400 kb/s, due to congestion and contention for capacity with other users over shared international connections. At this rate video quality would be poor and virtually unacceptable. It is possible to alter the underlying network to provide say 2Mb/s throughput for the particular user, but this requires changes to the core Internet Protocol (IP) network. The concept of using multiple virtual connections and access connections to support improved throughput is already established and implemented in the form of Inverse Multiplexing for ATM (IMA) *(ATM-Forum AF-PHY-0086.0010):* for internet access the end user would get a single IP address and the access server would reassemble the data into one stream for routing across the internet. Note the access server is the gateway between the connection orientated ATM access network and the IP routed core. Therefore there would be no benefit if the bottleneck is in fact between the access server and the database being accessed.

Most access networks have the capability to allow an end user, if he so chooses, to gain access several times simultaneously, using the same or different Internet service providers. Each time the user logs on he gets another IP address. To the core IP network these addresses all appear to be separate users. When it is heavily loaded, the core network divides its bandwidth up equally between the addresses contending for access, so a user who has logged on three times will get three times as much bandwidth as a user logged on only once. The mechanism to log on a plurality of times could be multiple asynchronous transfer mode (ATM) permanent or switched virtual connections (PVCs or SVCs), or the PPPoE (Point to Point Protocol over Ethernet). However, if the internet application streaming the data to the end user receives requests for a particular stream from three separate IP address it will send the same data to all three addresses and so the additional bandwidth will be of no practical use, as the data will simply be duplicated between the various links.

United States Patent Application US2002/0083193 discloses a system to allow data sources to specify a route to be taken. However, the system disclosed therein requires the internet to be configured in a particular way to support a diverse routing capability. The present invention is intended to interface with the existing internet, without limitations on how it is configured.

According to one aspect of the invention, there is provided a method of accessing data from an internet application over a distributed information network, wherein a user terminal generates a plurality of access requests for the same data to be delivered by the internet application over a plurality of routes, each of the said routes being associated with an internet service provider and each request conveying an indication of their common origin to the targeted internet application, the internet application identifies whether a plurality of addresses making requests for the same data are associated with the same end user, and where this is the case splitting the requested data and streaming different parts of the data to the different addresses requesting it, and the user terminal receives the requested data over the plurality of routes and assembles it into a single stream.

According to another aspect of the invention, an internet application for providing data on receipt of requests from user terminals over a distributed information network has means arranged to identify whether each of a plurality of such requests for the same data, received from a plurality of addresses over routes associated with one of the internet service providers, each convey an indication of a common originating user terminal, and where this is the case splitting the requested data, and streaming different parts of the data to the different addresses requesting it According to a complementary aspect, the end user application is provided with means for generating a plurality of access requests for the same data to be delivered by the internet application over a plurality of routes to a plurality of addresses associated with the user terminal, each request conveying an indication of their common originating user terminal to the targeted internet application, and means for receiving the requested data and to assemble the data sent over the plurality of routes into a single stream for access by the user.

Buffering may be necessary if traffic is slower over one path than it is over another. In a preferred embodiment the intemet application comprises means for identifying correlation codes associated with data requests, means for associating each such data request with any previous requests for the same data having the same correlation code, and means for splitting the requested data between the addresses associated with the data requests. The corresponding user terminal comprises means for generating a first access request having a correlation code indicative of its origin, means for determining whether the data rate of the data received in response to the first request meets a predetermined level, and means to generate one or more further requests over different routes using the same correlation code.

The invention offers an improved quality of service and improved download speed. The invention requires the internet application and the user equipment to cooperate such that the internet application can identify addresses of users making use of this invention, but requires no changes to the core internet or IP networks currently deployed, or their component equipment (Routers and Access Servers). The user may connect conventionally several times to the same Internet Service Provider, or may prefer to simultaneously connect to multiple Internet Service Providers - a capability known to be possible with multiple virtual channels, either permanent or switched.

Therefore with a simple change to the broadband access network, the end user client software and internet application, the end user can receive non real time data at several times the rate of a user with only a single Internet connection. The management and support systems of the access network may require modification to provide the ability to operate the user's broadband Internet connection as a plurality of virtual channels, which may each be connected to a different ISP.

The greater delay, and greater variation in that delay, may require larger initial buffers and may result in the video taking longer to start up and appear on the screen after being requested. In one preferred arrangement a first stream is connected in the conventional way, others being added if the received bit-rate is not deemed adequate. Thus the initial delay would be minimised. Viewers who frequently switch between different TV channels would therefore be able to identify what is being shown on the channel without delay, but may have to wait for the quality to reach an optimum level.

An embodiment of the invention will now be described, by way of example, with reference to the drawings in which
Figure 1 is a schematic illustration of a prior art conventional Single ISP Connection Service;
Figure 2 is a schematic illustration of the connection of three switched virtual connections (SVCs) to three Internet protocol (IP) Addresses;
Figure 3 is a schematic illustration of why streaming would not work over multiple conventional SVCs
Figure 4 is a schematic illustration of a system operating according to the invention, with correlated streaming over multiple paths.
Figure 5 is a flow chart illustrating the method of operation of one embodiment of the invention.

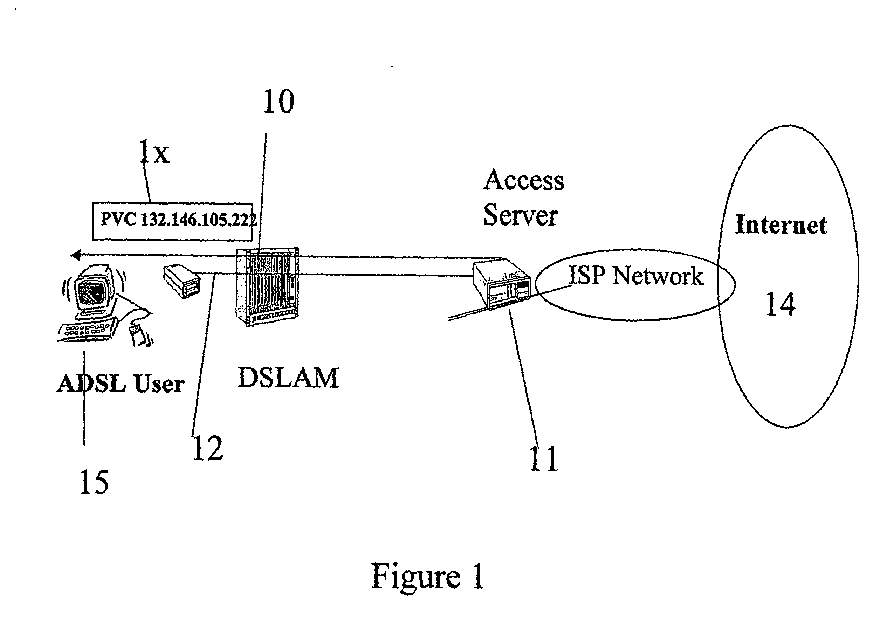

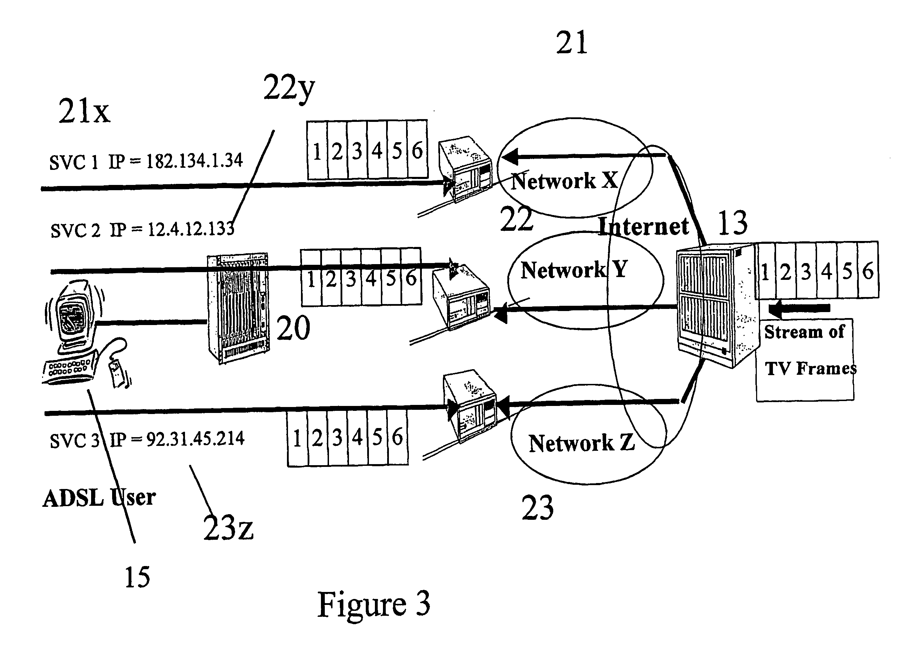

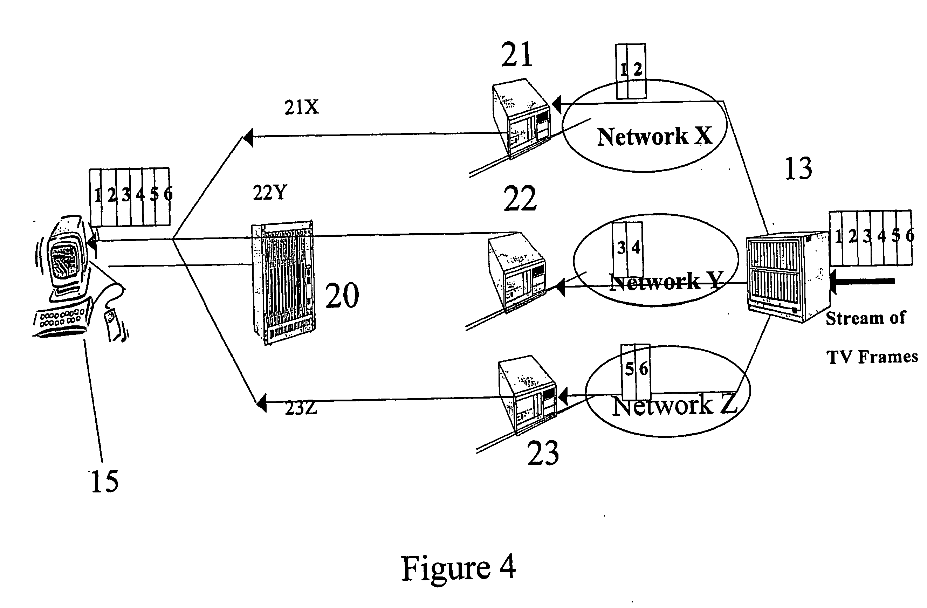

As shown in Figure 1, currently a single permanent virtual circuit (PVC) 10 is set up between the user terminal 1 of an ADSL user, and the access server 11. The access server 11 terminates the PVC 10 and the PPP (12) signalling encapsulated onto the PVC. It also gives the end user terminal 1 an IP address 1 X to enable it to connect to the Internet 14 and send data to any other Internet application, for example a broadcast webserver 13 (Figures 3 and 4).

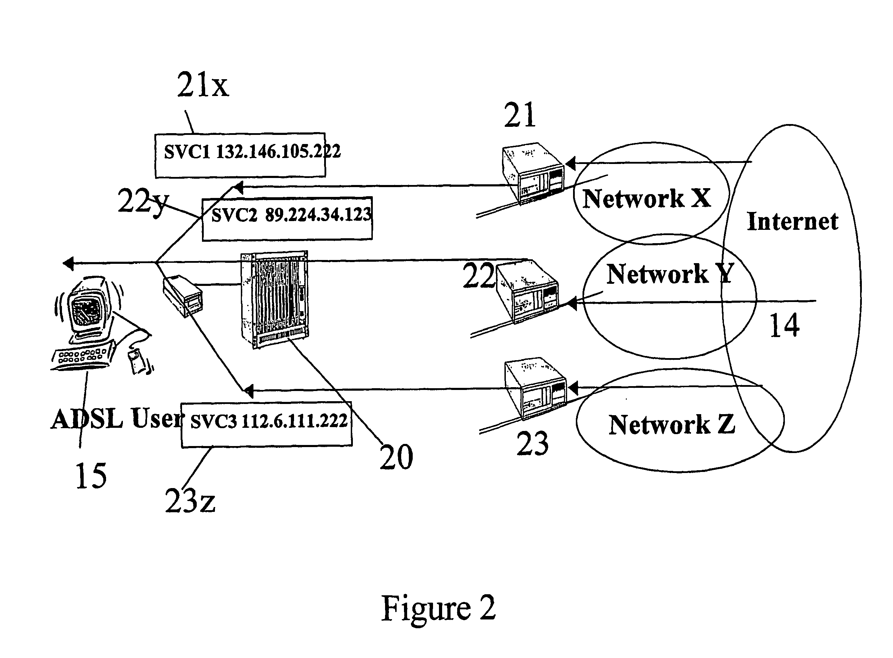

With a switched virtual circuit (SVC) ADSL multiplexer (DSLAM) 20 the end user terminal 15 can connect simultaneously to multiple access servers 21, 22, 23. Figure 2 shows the user logged on to three different Internet service providers. Again using PPP he is given a unique routable IP address 21X, 22Y, 23Z for each connection. Although the increased number of connections marginally increases the contention level (the number of individual IP addresses attempting to access data), at busy times the individual user connected to three ISPs as in Figure 2 will still get almost three times as much data through as a user connected to a single ISP as in the example of Figure 1. (The actual increase in rate is 3n/(n + 2) where n is the total number of IP addresses accessing data. When traffic is busy, the value of "n" is large and so the expression converges on the value 3.0)

If all three connections are made to the same destination server 13, the user 15 of the arrangement in Figure 2 will not gain in overall information rate, because most of the data will be duplicated. Figure 3 shows how, using the existing IP network streaming protocols, the server 3 being accessed would consider the user 15 to be three different users because it receives requests from three different IP addresses 21 X, 22Y, 23Z. It would then send the same data to the end user 15 over each of the three different routes, via the access servers 21, 22, 23, so there is clearly little benefit in setting up extra SVCs and trying to downstream the data over them.

Consider the scenario where the user 15 is trying to downstream video at 500kb/s from a broadcast webserver 13 in another continent. Each of the connections 21, 22, 23 are heavily loaded and can each only supply 200kb/s. The user will obtain useful data only at the rate of the fastest of the three connections.

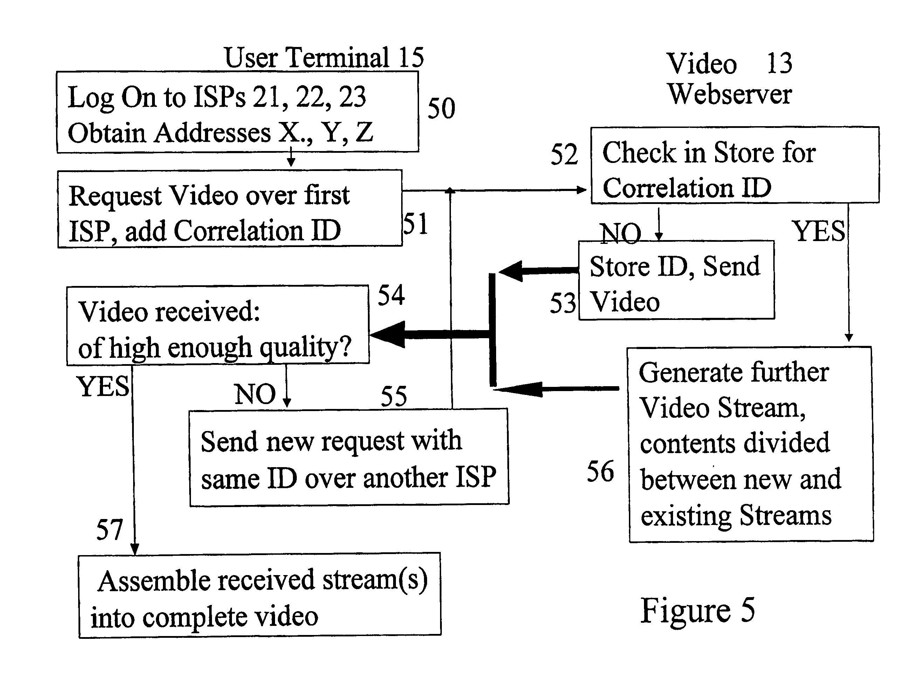

In the embodiment shown in Figures 4 and 5, an enhanced streaming protocol is provided, containing a correlation ID from the end user. The correlation ID is chosen such that it is unlikely to be duplicated by other users. It could be generated in a variety of ways, either randomly or based on the user's unique address..

As shown in Figure 5, the user terminal 15 logs on to several Internet Service Providers' access servers 21, 22, 23....., obtaining a different address X, Y, Z......... from each server (step 50). It would be possible to establish two or more connections to the same ISP. However, some ISPs have authentication systems designed to prevent simultaneous logons by the same user, in order to prevent fraudulent access. Such authentication systems would require reconfiguration to allow such simultaneous logons to take place.

The user terminal 15 first makes an initial streaming request 51, including the unique correlation code, over a first access server 21.

The broadcast webserver 13 checks this request against a store of previous requests (step 52) but fails to find any such requests with the same correlation code. Since this is the first request for this data that the user 1 has made, no such previous request has been recorded and the video stream is returned to the user 1 in the conventional manner (step 53).

The user terminal 15 now checks the data rate of the video stream against a predetermined value (step 54). If the data rate is too slow, the user terminal 1 transmits a similar request 55, using the same correlation code but using a different access server 22.

The user terminal may also start to show the video stream with the reduced quality dictated by the low bit rate, so that the user can see what is being received. Alternatively, the data may be buffered so that the stream can all be shown at full quality when the further stream or streams have been added. The reduction in quality of the first option is preferred when delay is undesirable, such as when a real-time signal is being transmitted, or if a user is sampling a number of feeds to see what is available.

The webserver 13 again checks this request 55 against the store of previous requests (step 52) but this time recognises that the requests 51, 55, despite coming from different IP addresses, 21 X, 22Y are in fact from the same origin 1. The server 3 then apportions the data between the connections 21, 22 according to the rates they can each support (step 56). The information on attainable data rates can be obtained from, for example the TCP sliding window size in the current TCP/IP stack. The windows size adapts to the data throughput in the current internet TCP session, , so it is a reasonably accurate representation of throughput.. A small data overhead is required in the transmitted data to identify the order in which the data is to be reassembled.

This process is repeated until the user terminal 1 determines (step 54) that the data rate is satisfactory (or all available addresses have been used), and then the received data is buffered and assembled in the correct order (step 57). Consequently, over several service providers 21, 22, 23 the user's effective data rate would be the sum of the service providers' throughputs, rather than just the fastest one on its own. So in this example three 200 kb/s connections would provide 600kb/s. Thus a 500kb/s TV stream could be supported by the three connections working together, where none of them could do so on its own. In order to avoid overloading of the network by users attempting vast numbers of parallel access attempts, the internet application may limit the number of connections available to any given user. However, in practice a user attempting to use more than a few connections would experience no greater benefit, as the bandwidth of his own access connection would become the limiting factor.

The invention may be used in conjunction with the invention described in the applicant's International patent application WO04/040851 filed on the same date as the present application and claiming priority from United Kingdom patent application 0225359.9. That other application describes a method of improving the latency (delay)_of a signal by transmitting it in its entirety over several parallel channels such that, for each packet sent to the destination, the first instance of that packet to arrive is assembled with the first instance of the other packets to arrive to form a single output stream. For example using six feeds (IP Addresses), a stream may be split into two to double the bandwidth according to the present invention, and then these two streams are then each duplicated three times to reduce delay.

## Claims

1. An internet application (13) for providing data on receipt of requests from user terminals over a distributed information network (X, Y, Z), having means arranged to identify whether each of a plurality of such requests for the same data, received from a plurality of addresses over routes (21, 22, 23) associated with one of the internet service providers, each convey an indication of a common originating user terminal (15), and where this is the case splitting the requested data, and streaming different parts of the data to the different addresses (21x, 22y, 23z) requesting it.

2. An internet application according to claim 1, comprising means for identifying correlation codes associated with data requests, means for associating each such data request with any previous requests for the same data having the same correlation code, and means for splitting the requested data between the addresses (21x, 22y, 23z) associated with the data requests

3. An internet application according to claim 1 or claim 2, comprising means for identifying the data rates available to each of the requesting addresses and apportioning the data between the addresses accordingly.

4. A user terminal (15) for accessing data from an intemet application (13) over a distributed information network (X, Y, Z), provided with means for generating a plurality of access requests for the same data to be delivered by the internet application over a plurality of routes (21X, 22Y, 23Z) to a plurality of addresses associated with the user terminal, the requests each conveying an indication of their common originating user terminal (15) to the targeted internet application (13), and means for receiving the requested data and to assemble the data sent over the plurality of routes into a single stream for access by the user.

5. A user terminal according to claim 4, comprising means for generating a first access request having a correlation code indicative of its origin, means for determining whether the data rate of the data received in response to the first request meets a predetermined level, and means to generate one or more further requests over different routes using the same correlation code.

6. A user terminal according to claim 4 or 5, comprising means for buffering the incoming data to allow its reassembly in a manner prescribed by the data content.

7. A method of accessing data from an internet application (13) over a distributed information network (X, Y, Z), wherein a user terminal (15) generates a plurality of access requests for the same data to be delivered by the internet application (13) over a plurality of routes, each of the said routes being associated with an internet service provider and the requests each conveying an indication of their common origin to the targeted internet application (13), the internet application identifies whether a plurality of addresses making requests for the same data are associated with the same end user, and where this is the case splitting the requested data and streaming different parts of the data to the different addresses requesting it, and the user terminal (15) receives the requested data over the plurality of routes and assembles it into a single stream.

8. A method according to claim 7, wherein the user terminal (15) generates an initial access request with a correlation code indicative of its origin and the internet application (13) stores the correlation code, and if the user terminal determines that the data received in response to the initial request does not meet a predetermined data rate, it transmits one or more further requests using the same correlation code, the internet application identifying such requests as being associated with the same end user.

9. A method according to claim 7 or 8, wherein the internet application identifies the data rates available on the connection to each of the requesting addresses and apportions the data to be transmitted to each of the addresses accordingly.

10. A method according to claim 7, 8 or 9, wherein the incoming data contains information to allow the user terminal to reassemble it, and the user terminal buffers the information to allow its reassembly accordingly.

## Patentansprüche

1. Internetanwendung (13) zum Bereitstellen von Daten beim Empfang von Anfragen von Benutzerendgeräten über ein verteiltes Informationsnetzwerk (X, Y, Z), die eine Einrichtung aufweist, die dazu eingerichtet ist, festzustellen, ob jede von mehreren solchen Anfragen nach denselben Daten, die von mehreren Adressen über Leitwege (21, 22, 23) empfangen werden, die zu einem der Internetdienstanbieter gehören, eine Angabe über ein gemeinsames Ursprungs-Benutzerendgerät (15) überträgt, und, wenn dies der Fall ist, die angefragten Daten aufzuteilen und verschiedene Teile der Daten an verschiedene Adressen (21x, 22y, 23z), die sie anfragen, zu streamen.

2. Internetanwendung nach Anspruch 1, die eine Einrichtung, die Korrelationscodes identifiziert, die Anfragen nach Daten zugeordnet sind, eine Einrichtung, die jede solche Anfrage nach Daten allen vorangehenden Anfragen nach denselben Daten, die denselben Korrelationscode haben, zuordnet, und eine Einrichtung umfasst, die die angefragten Daten unter den Adressen (21x, 22y, 23z) aufteilt, die zu den Anfragen nach Daten gehören.

3. Internetanwendung nach Anspruch 1 oder Anspruch 2, die eine Einrichtung umfasst, die die Datenraten feststellt, die jeder der anfragenden Adressen zur Verfügung steht, und den Adressen die Daten dementsprechend zuteilt.

4. Benutzerendgerät (15) zum Zugreifen auf Daten von einer Internetanwendung (13) über ein verteiltes Informationsnetzwerk (X, Y, Z), das mit einer Einrichtung, die mehrere Anfragen nach Zugriff auf dieselben Daten erzeugt, die von der Internetanwendung über mehrere Leitwege (21X, 22Y, 23Z) an mehrere Adressen, die dem Benutzerendgerät zugeordnet sind, geliefert werden sollen, wobei die Anfragen jeweils eine Angabe über ihr gemeinsames Ursprungs-Benutzerendgerät (15) an die Ziel-Internetanwendung (13) übertragen, und mit einer Einrichtung ausgestattet ist, die die angefragten Daten empfängt, und die Daten, die über die mehreren Leitwege gesendet werden, für den Zugriff durch den Benutzer zu einem einzelnen Stream zusammensetzt.

5. Benutzerendgerät nach Anspruch 4, das eine Einrichtung, die eine erste Anfrage nach Zugriff mit einem Korrelationscode erzeugt, der ihren Ursprung angibt, eine Einrichtung, die feststellt, ob die Datenrate der Daten, die als Reaktion auf die erste Anfrage empfangen werden, ein zuvor festgelegtes Niveau erreicht, und eine Einrichtung umfasst, die eine oder mehrere weitere Anfragen über andere Leitwege erzeugt, wobei der selbe Korrelationscode verwendet wird.

6. Benutzerendgerät nach Anspruch 4 oder 5, das eine Einrichtung umfasst, die die ankommenden Daten puffert, um zu ermöglichen, dass sie auf eine Weise wieder zusammengesetzt werden, die durch den Inhalt der Daten vorgeschrieben wird.

7. Verfahren für den Zugriff auf Daten von einer Internetanwendung (13) über ein verteiltes Informationsnetzwerk (X, Y, Z), bei dem ein Benutzerendgerät (15) mehrere Anfragen nach Zugriff auf die selben Daten erzeugt, die von der Internetanwendung (13) über mehrere Leitwege geliefert werden sollen, wobei jeder der Leitwege zu einem Internetdienstanbieter gehört und jede der Anfragen eine Angabe über ihren gemeinsamen Ursprung zu der Ziel-Internetanwendung (13) überträgt, wobei die Internetanwendung feststellt, ob mehrere der Adressen, die Anfragen nach denselben Daten machen, zu demselben Endbenutzer gehören, und wenn dies der Fall ist, die angefragten Daten aufteilt und verschiedene Teile der Daten an die verschiedenen Adressen streamt, die sie Anfragen, und das Benutzerendgerät (15) die angefragten Daten über die mehreren Leitwege empfängt und sie wieder zu einem einzelnen Stream zusammensetzt.

8. Verfahren nach Anspruch 7, bei dem das Benutzerendgerät (15) eine anfängliche Anfrage nach Zugriff mit einem Korrelationscode erzeugt, der ihren Ursprung angibt, und die Internetanwendung (13) den Korrelationscode speichert, und, wenn das Benutzerendgerät feststellt, dass die Daten, die als Reaktion auf die anfängliche Anfrage empfangen werden, nicht eine zuvor festgelegte Datenrate erreichen, es eine oder mehrere weitere Anfragen sendet, die den selben Korrelationscode verwenden, wobei die Internetanwendung solche Anfragen als zu demselben Endbenutzer gehörig identifiziert.

9. Verfahren nach Anspruch 7 oder 8, bei dem die Internetanwendung die Datenraten feststellt, die über die Verbindungen zu jeder der anfragenden Adressen verfügbar sind, und die Daten, die zu jeder der Adressen übertragen werden sollen, dementsprechend zuteilt.

10. Verfahren nach Anspruch 7, 8 oder 9, bei dem die ankommenden Daten Informationen enthalten, die dem Benutzerendgerät ermöglichen, sie wieder zusammenzusetzen, und das Benutzerendgerät die Informationen puffert, um zu ermöglichen, dass sie dementsprechend wieder zusammengesetzt werden.

## Revendications

1. Application Internet (13) destinée à fournir des données lors de la réception de requêtes en provenance de terminaux utilisateur sur un réseau d' informations distribué (X, Y, Z) comprenant des moyens agencés pour identifier si chacune d'une pluralité de ces requêtes pour les mêmes données, reçues en provenance d'une pluralité d'adresses par des chemins (21, 22, 23) associés à un des fournisseurs de services Internet, transportent chacune une indication d'un terminal utilisateur d'origine commun (15), et lorsque c'est le cas, diviser les données demandées, et diffuser différentes parties des données vers les différentes adresses (21x, 22y, 23z) qui les demandent.

2. Application Internet selon la revendication 1, comprenant des moyens destinés à identifier des codes de corrélation associés à des requêtes de données, des moyens destinés à associer chacune de ces requêtes de données avec n'importe quelles requêtes précédentes pour les mêmes données ayant le même code de corrélation, et des moyens destinés à diviser les données demandées entre les adresses (21x, 22y, 23z) associées aux requêtes de données.

3. Application Internet selon la revendication 1 ou la revendication 2, comprenant des moyens destinés à identifier les débits de données disponibles vers chacune des adresses demandeuses et répartir les données entre les adresses en conséquence.

4. Terminal utilisateur (15) destiné à accéder à des données provenant d'une application Internet (13) sur un réseau d'informations distribué (X, Y, Z), pourvu de moyens destinés à générer une pluralité de requêtes d'accès pour les mêmes données devant être remises par l'application Internet sur une pluralité de chemins (21X, 22Y, 23Z) à une pluralité d'adresses associées au terminal utilisateur, les requêtes transportant chacune une indication de leur terminal utilisateur d'origine commun (15) vers l'application Internet ciblée (13), et des moyens destinés à recevoir les données demandées et à assembler les données envoyées sur la pluralité de chemins en un seul flux pour un accès par l'utilisateur.

5. Terminal utilisateur selon la revendication 4, comprenant des moyens destinés à générer une première requête d'accès comprenant un code de corrélation indicateur de son origine, des moyens destinés à déterminer si le débit de données des données reçues en réponse à la première requête respecte un niveau prédéterminé, et des moyens pour générer une ou plusieurs requêtes supplémentaires sur différents chemins en utilisant le même code de corrélation.

6. Terminal utilisateur selon la revendication 4 ou 5, comprenant des moyens destinés à mettre en mémoire tampon les données entrantes pour permettre leur réassemblage d'une manière prédéfinie par le contenu de données.

7. Procédé d'accès à des données provenant d'une application Internet (13) sur un réseau d'informations distribué (X, Y, Z), dans lequel un terminal utilisateur (15) génère une pluralité de requêtes d'accès pour les mêmes données devant être remises par l'application Internet (13) sur une pluralité de chemins, chacun desdits chemins étant associé à un fournisseur de services Internet et les requêtes transportant chacune une indication de leur origine commune vers l'application Internet ciblée (13), l'application Internet identifie si une pluralité d'adresses effectuant des requêtes pour les mêmes données est associée au même utilisateur final, et si c'est le cas, diviser les données demandées et diffuser différentes parties des données vers les différentes adresses qui les demandent, et le terminal utilisateur (15) reçoit les données demandées sur la pluralité de chemins et les assemble en un flux unique.

8. Procédé selon la revendication 7, dans lequel le terminal utilisateur (15) génère une requête d'accès initiale avec un code de corrélation indicateur de son origine et l'application Internet (13) mémorise 1e code de corrélation, et si le terminal utilisateur détermine que les données reçues en réponse à la requête initiale ne répond pas à un débit de données prédéterminé, il émet une ou plusieurs requêtes supplémentaires en utilisant le même code de corrélation, l'application Internet identifiant ces requêtes comme étant associées au même utilisateur final.

9. Procédé selon la revendication 7 ou 8, dans lequel l'application Internet identifie les débits de données disponibles sur la connexion vers chacune des adresses demandeuses et répartit les données à émettre vers chacune des adresses en conséquence.

10. Procédé selon la revendication 7, 8 ou 9, dans lequel les données entrantes contiennent des informations pour permettre au terminal utilisateur de les réassembler, et le terminal utilisateur met en mémoire tampon les informations pour permettre leur réassemblage en conséquence.
